# EUROPÄISCHE PATENTSCHRIFT

(11) **EP 1 526 354 B1**
(45) Veröffentlichungstag und Bekanntmachung des Hinweises auf die Patenterteilung: **06.03.2019**
(21) Anmeldenummer: 05001903.3
(22) Anmeldetag: 23.09.2003
(51) Int. Cl.: G01D 5/20, G01B 7/30, G01D 5/14, G01D 5/16, G01D 5/244

(54) **Vorrichtung und Verfahren zum Erfassen einer Winkelposition eines rotierenden Gegenstandes**
Device and method for determining the angular position of a rotating element
Dispositif et procédé pour déterminer la position angulaire d'un élement en rotation

(30) Priorität: 06.11.2002 DE 10252031
(43) Veröffentlichungstag der Anmeldung: 27.04.2005
(62) Teilanmeldung aus: 03021432.4
(73) Patentinhaber: TDK-Micronas GmbH, 79108 Freiburg (DE)
(72) Erfinder: Bossfeld, Lothar, 79874 Breitnau (DE)
(74) Vertreter: Koch Müller Patentanwaltsgesellschaft mbH

(56) Entgegenhaltungen:
- EP-A- 0 590 190
- DE-A1- 4 435 678

## Beschreibung

Die vorliegende Erfindung betrifft eine Sensoreinrichtung zum Erfassen einer Winkelposition eines rotierenden Gegenstandes, insbesondere zum Erfassen des Zeitpunkts, an welchem der rotierende Gegenstand eine vorgegebene Winkelposition passiert.

Eine solche Sensoreinrichtung ist z. B. aus DE 44 35 678 A1 und aus EP 0 590 190 A1 bekannt.
Vorrichtungen und Verfahren dieser Art werden z.B. in KFZ-Motoren eingesetzt, um die genaue Winkelstellung einer Kurbelwelle oder eine Ventilstellung zu erfassen und anhand der erfassten Stellung z.B. die Verbrennung in einem Zylinder des KFZ-Motors zu steuern. Der Schadstoffgehalt in den Abgasen einer solchen Verbrennung hängt kritisch vom Zündzeitpunkt und damit von der Genauigkeit ab, mit der die Regelposition, anhand derer die Zündung gesteuert werden soll, erfasst werden kann.
Vorrichtungen zum Erfassen einer Winkelposition, die in einem solchen Umfeld zur Anwendung kommen können, sind zahlreich bekannt. Im Wesentlichen gibt es zwei Gruppen von Erfassungsfehlern, die an einer solchen Vorrichtung auftreten können. Es sind dies zum Einen konstante Winkelfehler, die vor allem mit Ungenauigkeiten bei der Platzierung einer solchen Vorrichtung an dem Gegenstand, dessen Winkelposition es zu erfassen gilt, oder der Positionierung der Komponenten der Vorrichtung zueinander zusammenhängen, und andererseits zeitlich veränderliche Fehler, die stochastisch, drehzahlabhängig oder thermisch bedingt sein können. Diese Fehler können diverse Ursachen haben. In gegenwärtigen Winkelpositionserfassungsvorrichtungen kommen meist als Sensoren induktive Magnetsensoren oder Hall-Sensoren zum Einsatz, die mit einem am zu erfassenden Gegenstand angebrachten Magneten wechselwirken. Diese Sensoren liefern ein mit der Position des zu erfassenden Magneten stetig veränderliches Sensorausgangssignal, dessen Amplitude stark abhängig ist vom Abstand zwischen dem zu erfassenden Gegenstand und dem Sensor. Änderungen der Drehzahl des Gegenstandes verändern sowohl die Frequenz als auch die Form des Sensorausgangssignals, so dass im Allgemeinen aus dem Pegel des Sensorausgangssignals nicht eindeutig auf eine bestimmte Winkelposition rückgeschlossen werden kann. Um diese Probleme zu beheben, sind im wesentlichen zwei Techniken bekannt. Die erste beruht auf der Verwendung eines automatisch geregelten Verstärkers, dem das Sensorausgangssignal zugeführt wird und der aus diesem ein Signal mit einer fest vorgegebenen Amplitude erzeugt, bei dem dann angenommen wird, dass ein bestimmter Wert des verstärkungsgesteuerten Signals stets einer gleichen Winkelposition des zu erfassenden Gegenstandes entspricht. Dieses Verfahren hat den Nachteil, dass die Regelung auf Störungen oder Exzentrizität des Geberrades reagiert und in solchen Situationen zusätzliche Messfehler einführt.

Die zweite bekannte Technik beruht darauf, jeweils die Signalspitzen des Sensorausgangssignals zu erfassen und anhand von diesen die Winkelposition des zu erfassenden Gegenstandes zu bestimmen. Dabei geht man davon aus, dass das Sensorausgangssignal seinen maximalen Pegel - auch wenn dessen Wert fluktuiert - immer bei der gleichen Winkelposition des zu erfassenden Gegenstandes erreichen wird. Hier ergibt sich das Problem, dass die Ausgangssignale der üblichen induktiven Magnetsensoren oder Hall-Sensoren mehr oder weniger sinusförmig sind und infolgedessen sehr flache Signalspitzen aufweisen, die sehr empfindlich gegen Rauschen und Störungen sind.

Aufgabe der vorliegenden Erfindung ist, eine Vorrichtung und ein Verfahren zum Erfassen einer Winkelposition eines rotierenden Gegenstandes anzugeben, das eine präzise Winkelerfassung ohne automatische Verstärkungssteuerung und ohne Erfassung der Spitzen des Sensorausgangssignals ermöglicht und so die Nachteile der oben genannten Ansätze vermeidet.

Die Aufgabe wird erfindungsgemäß gelöst durch eine Vorrichtung mit den Merkmalen des Anspruchs 1. Weiterbildungen der Erfindung sind Gegenstand der Unteransprüche.

Während bei dem oben beschriebenen zweiten Ansatz als Bezugspunkt für die Auswertung des Sensorausgangssignals ausgerechnet derjenige Wertebereich gewählt wird, in welchem die Abhängigkeit des Sensorausgangssignals von der Winkelposition des zu erfassenden Gegenstandes ein Minimum erreicht, wird erfindungsgemäß für eine Schaltschwelle, bei deren Überschreitung festgestellt wird, dass der Gegenstand die zu erfassende Winkelposition hat, ein Wertebereich des Sensorausgangssignals gewählt, in welchem dieses schnell mit der Winkelposition variiert. Was eine schnelle Veränderung in Abhängigkeit von der Winkelposition ist, kann zwangsläufig nur mit Bezug auf die funktionsmäßige Abhängigkeit des Erfassungssignalpegels von der Winkelposition des zu erfassenden Gegenstandes definiert werden. So kann man z.B. als einen Wertebereich mit schneller Änderung des Pegels einen Wertebereich definieren, der Winkelpositionen entspricht, bei denen der Betrag der Ableitung des Sensorausgangssignals nach der Winkelposition wenigstens 10, 20, 30 oder 50 % des Maximalwerts dieser Ableitung beträgt. Wenn man z.B. annimmt, dass das Sensorausgangssignal sinusförmig mit der Winkelposition des Gegenstandes variiert, was für eine Vielzahl von Anwendungssituationen zutrifft, so liegen die Bereiche, in denen der Pegel des Sensorausgangssignals schnell mit der Winkelposition variiert, jeweils in der Umgebung der Winkelpositionen, an welchen das Sensorausgangssignal seinen eigenen Mittelwert kreuzt.

In der Nähe dieses Mittelwerts wird man daher zweckmäßigerweise die Schaltschwelle wählen.

Da der Mittelwert des Sensorausgangssignals für einen gegebenen Typ von Sensor je nach Umgebung, in der er eingesetzt wird, variieren kann, ist die erfindungsgemäße Vorrichtung zweckmäßigerweise mit einer Mittelwertbildungsschaltung versehen, von der ein Eingang das Sensorausgangssignal empfängt und ein Ausgang ein für die Schaltschwelle repräsentatives Signal liefert. Eine solche Mittelwertbildungsschaltung macht die erfindungsgemäße Vorrichtung unabhängig von durch die Einbausituation oder durch Driften verursachte Verschiebungen des Mittelwerts des Sensorausgangssignals.

Da das Sensorausgangssignal stetig mit der Winkelposition des Gegenstandes variiert, entspricht jeder Pegel des Sensorausgangssignals, der kein Extremwert ist, zwei verschiedenen Winkelpositionen des Gegenstandes. Um diese beiden Positionen voneinander zu unterscheiden und selektiv nur eine von ihnen zu erfassen, ist die Schaltschwelle vorzugsweise durch einen ersten Referenzpegel definiert, und die Auswertungsschaltung liefert das Erfassungssignal nur, wenn der Pegel des Erfassungssignals von oben kommend diesen ersten Referenzpegel kreuzt, nicht aber, wenn er ihn von unten kommend kreuzt. Analog kann natürlich ein zweiter Referenzpegel definiert sein, bei dem die Auswertungsschaltung das Erfassungssignal liefert, wenn der Pegel des Erfassungssignals von unten kommend den zweiten Referenzpegel kreuzt und es nicht liefert, wenn der Pegel des Erfassungssignals von oben kommend den zweiten Referenzpegel kreuzt.

Beide Referenzpegel sind gleichzeitig in der erfindungsgemäßen Vorrichtung definiert und unterschiedlich, da dies es auf einfache Weise gestattet, eine Hysterese zu erzeugen, die fehlerhafte Mehrfacherfassungen der vorgegebenen Winkelposition des Gegenstandes aufgrund von Signalrauschen im Laufe einer Umdrehung des Gegenstandes unterdrückt.
Die Auswertungsschaltung, welche das Erfassungssignal liefert, umfasst vorzugsweise einen Komparator mit zwei Eingängen, der an einem ersten Eingang das Sensorausgangssignal empfängt und das Erfassungssignal an seinem Ausgang liefert, wenn die Pegel der Signale an seinen zwei Eingängen einander kreuzen, und eine Auswahlschaltung zum wahlweisen Zuführen des ersten oder des zweiten Referenzpegels zum zweiten Eingang des Komparators.

Einer ersten, einfachen Ausführungsform zufolge, sind die zwei Referenzpegel jeweils beiderseits eines Mittelwerts des Sensorausgangssignals gewählt. In Kenntnis des funktionellen Zusammenhangs zwischen der Winkelposition des Gegenstandes und dem Sensorausgangssignal kann der Abstand der zwei Referenzpegel vom Mittelwert jeweils so gewählt werden, dass sie zwei Winkelpositionen des Gegenstandes jeweils in gleichem Abstand von derjenigen Winkelposition entsprechen, bei der das Sensorausgangssignal den Mittelwert kreuzt. Im Falle eines sinusförmigen Zusammenhangs zwischen Winkelposition und Sensorausgangssignal müssen hierfür die zwei Referenzpegel in jeweils gleichem Abstand oberhalb bzw. unterhalb des Mittelwertes liegen.

Einer Weiterentwicklung der Erfindung zufolge sind die zwei Referenzpegel zwischen einem zentralen Pegel und jeweils einem von zwei von dem zentralen Pegel nach oben bzw. nach unten beabstandeten Pegeln veränderlich, und der erste Referenzpegel befindet sich am zentralen Pegel, wenn das Sensorausgangssignal den ersten Referenzpegel von oben kommend kreuzt, und der zweite Referenzpegel befindet sich am zentralen Pegel, wenn das Sensorausgangssignal den zweiten Referenzpegel von unten kommend kreuzt. So wird im einen wie im anderen Falle exakt der Durchgang des Sensorausgangssignals durch den zentralen Pegel erfasst und dennoch eine Hysterese realisiert.
Es gibt unterschiedliche Möglichkeiten, um zu gewährleisten, dass die beiden Referenzpegel sich jeweils zum richtigen Zeitpunkt auf dem zentralen Pegel befinden. Eine ist eine Phasenschieberschaltung oder eine Differentiationsschaltung (wobei im Falle eines sinusförmigen Zusammenhangs zwischen Winkelposition und Sensorausgangssignal zwischen beiden kein Unterschied besteht) zum Ableiten der Veränderung der Referenzpegel vom Sensorausgangssignal. Das mit einer solchen Schaltung erhaltene differenzierte Sensorausgangssignal kann genutzt werden, um je nach seinem Vorzeichen entweder den ersten oder den zweiten Referenzpegel gleich dem zentralen Pegel zu machen.

Alternativ kann die Auswertungsschaltung wenigstens einen zweiten Komparator und einen von dem Komparator gesteuerten Schalter umfassen, wobei an einem Eingang des Komparators das Sensorausgangssignal anliegt und am anderen Eingang des Komparators derjenige der zwei Referenzpegel anliegt, der gleichzeitig nicht am ersten Komparator anliegt, und der zweite Komparator schaltet den Schalter um, wenn die Pegel der zwei Eingangssignale des zweiten Komparators einander kreuzen.

Vorzugsweise ist die Vorrichtung ferner mit einer Amplitudenerfassungsschaltung zum Erfassen der Amplitude des Sensorausgangssignals versehen. Eine solche Amplitudenerfassungsschaltung kann insbesondere genutzt werden, um von ihr die zwei Referenzpegel oder, in dem Fall, dass die Referenzpegel variabel sind, deren von dem zentralen Pegel beabstandete Pegel abzuleiten.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: ein Blockdiagramm einer ersten Ausgestaltung einer erfindungsgemäßen Vorrichtung zum Erfassen einer Winkelposition;
- Fig. 2: Signalverläufe an verschiedenen Punkten der Schaltung aus Fig. 1;
- Fig. 3: eine zweite, weiterentwickelte Ausgestaltung der erfindungsgemäßen Vorrichtung;
- Fig. 4: eine dritte, weiterentwickelte Ausgestaltung der Vorrichtung;
- Fig. 5: eine abermals weiterentwickelte vierte Ausgestaltung der Vorrichtung;
- Fig. 6: Signalverläufe an verschiedenen Punkten der Schaltung aus Fig. 5;
- Fig. 7: eine fünfte Ausgestaltung der Vorrichtung; und
- Fig. 8: Signalverläufe an verschiedenen Punkten der Schaltung aus Fig. 7.

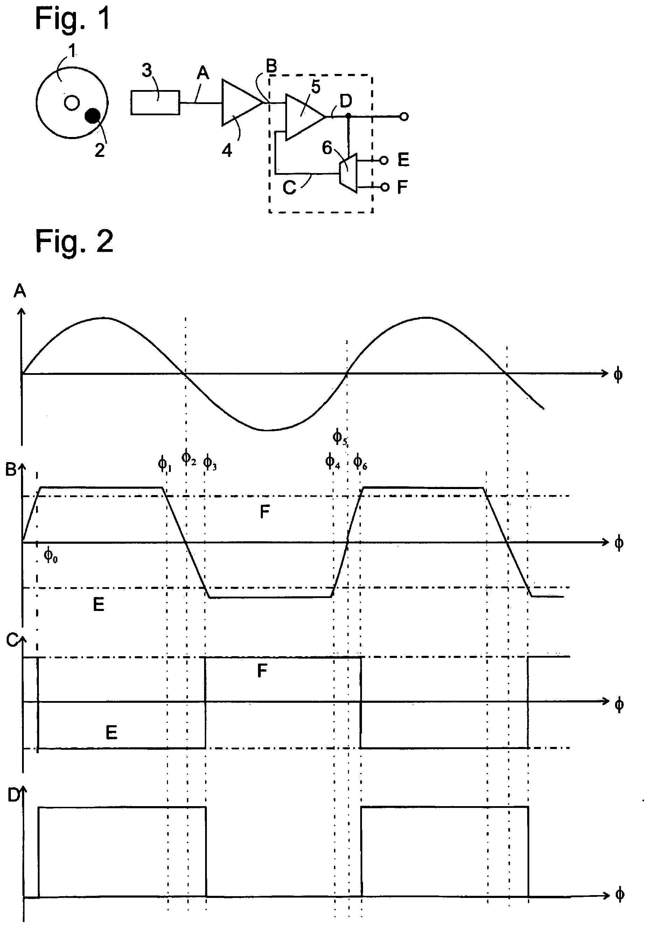

In Fig. 1 bezeichnet das Bezugszeichen 1 einen rotierenden Gegenstand wie etwa ein Geberrad an einer Kurbelwelle einer Brennkraftmaschine. Das Geberrad 1 trägt einen Magneten 2. Die Erfassungsvorrichtung umfasst einen Magnetfeldsensor 3, z.B. einen induktiven Sensor oder einen Hall-Sensor, der ein Sensorausgangssignal A liefert.

Das Sensorausgangssignal A ist in Fig. 2 als Funktion des Drehwinkels φ des Geberrades gezeigt und hat einen Verlauf ähnlich einer Sinusfunktion, wobei jede Periode der Sinusfunktion einer Umdrehung des Gegenstandes entspricht.

An den Ausgang des Magnetfeldsensors 3 ist ein Verstärker 4 angeschlossen, der ein verstärktes Sensorausgangssignal B liefert. Wie in Fig. 2 gezeigt, kann der Verstärker 2 bei großen Amplituden des Sensorausgangssignals A in Sättigung gehen. Dies ist für die Anwendung der Erfindung nützlich, da auf diese Weise ein weiterzuverarbeitendes Signal mit steilen, gut zu erfassenden Nulldurchgängen erhalten wird, es ist jedoch für die Anwendbarkeit der Erfindung nicht erforderlich.

Das verstärkte Sensorausgangssignal B ist einem ersten Eingang eines Komparators 5 zugeführt. An den zweiten Eingang des Komparators 5 ist ein Referenzpegel angelegt, der durch einen Schalter 6 zwischen zwei an dessen Eingängen anliegenden Referenzpegeln E, F ausgewählt ist. Die Referenzpegel E, F sind jeweils so gewählt, dass sie die Kurve des verstärkten Sensorausgangssignals B an Winkelpositionen φ₁ bzw. φ₃ schneiden, die in einem gleichen Winkelabstand vor bzw. hinter einem Nulldurchgang φ₁ liegen. Am Zeitursprung in Fig. 2, der willkürlich so gewählt ist, dass dort das Signal B den Wert Null hat, hat der Referenzpegel C den hohen Wert F. Der Komparator 5 liefert das Ausgangssignal D=0. Wenn bei einem Drehwinkel φ₀ der Wert des Signals B den Pegel F von unten kreuzt, kippt das Ausgangssignal D des Komparators 5 von Null auf Eins und zeigt so die Tatsache an, dass sich das Geberrad in der Drehposition φ₀ befindet. Gleichzeitig wird durch die Änderung des Ausgangssignals D der Schalter 6 umgeschaltet, so dass nun der niedrige Referenzpegel E am zweiten Eingang des Komparators 5 anliegt. Am Ausgangssignals D des Komparators 5 ändert dies zunächst nichts. Erst bei der Drehposition φ₃, wenn das Signal B unter den niedrigen Referenzpegel E abfällt, geht das Ausgangssignal D des Komparators 5 auf Null zurück, der Schalter 6 wird erneut umgeschaltet, und der Referenzpegel F liegt wieder am zweiten Eingang des Komparators an. Wenn das Signal B wieder über den Pegel F hinaus anwächst, ist ein Betriebszyklus der Vorrichtung abgelaufen. Da die erfindungsgemäße Vorrichtung auf schnelle Änderungen des Sensorausgangssignals A anspricht, ist eine genaue Bestimmung des Zeitpunkts möglich, an dem sich das Geberrad in der Stellung φ₀ (oder φ₃) befindet.

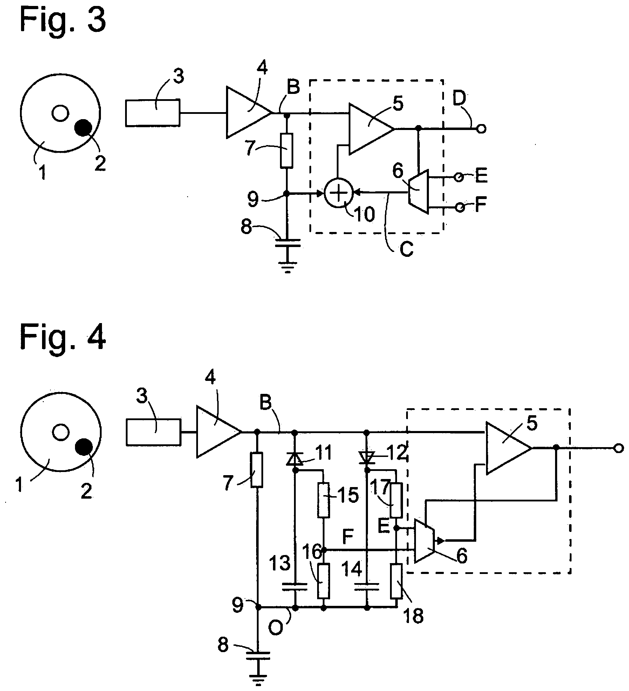

Fig. 3 zeigt eine erste Weiterentwicklung der Vorrichtung aus Fig. 1. Bei dieser Weiterentwicklung ist an den Ausgang des Verstärkers 4 eine Mittelwertbildungsschaltung angeschlossen, hier in Form eines RC-Gliedes aus einem Widerstand 7 und einem Kondensator 8, die in Reihe den Ausgang des Verstärkers 4 mit Masse verbinden. Das Potential, das sich während des Betriebs der Schaltung an einem Mittenpunkt 9 zwischen dem Widerstand und dem Komparator einstellt, entspricht bei geeigneter Auswahl der Zeitkonstante des RC-Gliedes der mittleren Spannung des verstärkten Sensorausgangssignals B. Dieser Mittenpunkt 9 ist an einen ersten Eingang eines Addiergliedes 10 angeschlossen, dessen zweiter Eingang mit dem Ausgang des Schalters 6 verbunden ist und dessen Ausgang mit dem zweiten Eingang des Komparators 5 verbunden ist. Das Addierglied 10 überlagert so dem jeweils vom Schalter 6 durchgeschalteten Referenzpegel die mittlere Spannung des verstärkten Sensorausgangssignals B und macht die Schaltung so unempfindlich gegen Driften des Sensors 3, des Verstärkers 4 oder eventuelle Unwuchten des Geberrades 1, die zu einem von Null abweichenden Mittelwert des Sensorausgangssignals A führen. So ist gewährleistet, dass trotz eventueller derartiger Driften das Ausgangssignal D des Komparators 5 stets bei der gleichen Winkelposition des Geberrades 1 sich ändert.

Eine erneute Weiterentwicklung ist in Fig. 4 gezeigt. Diese Ausgestaltung unterscheidet sich von den zwei zuvor gezeigten darin, dass hier die Referenzpegel E, F vom Sensorausgangssignal A abgeleitet werden. Zu diesem Zweck ist die Vorrichtung mit einer Amplitudenerfassungsschaltung für das (gesättigte oder nichtgesättigte) verstärkte Sensorausgangssignal B ausgestattet. Die Amplitudenerfassungsschaltung ist hier realisiert in Form von zwei Reihenschaltungen aus jeweils einer Diode 11, 12 und einem Kondensator 13, 14, die einerseits mit dem Ausgang des Verstärkers 4 und andererseits mit dem Mittenpunkt 9 des RC-Gliedes 7, 8 verbunden sind. Die Dioden 11, 12 sind jeweils antiparallel geschaltet, so dass über die Diode 11 der Kondensator 13 geladen wird, solange das Signal B ein Potential unterhalb des gemittelten Potentials O am Mittenpunkt 9 hat, und der Kondensator 14 über die Diode 12 geladen wird, wenn der Pegel des Signals B über dem Potential O des Mittenpunktes 9 liegt. Zwei Spannungsteiler aus Widerständen 15, 16 bzw. 17, 18 sind jeweils zu den Kondensatoren 13 bzw. 14 parallel geschaltet. Beide Spannungsteiler teilen die über den Kondensatoren 13, 14 anliegenden Spannungen in gleichem Verhältnis und führen sie als Referenzpegel E bzw. F dem Schalter 6 zu. Durch die Schaltung ist gewährleistet, dass die Referenzpegel E, F jeweils in einem festen, durch das Teilungsverhältnis der Spannungsteiler 15 bis 18 festgelegten Verhältnis zur Amplitude des verstärkten Sensorausgangssignals B stehen, so dass auch bei wechselnder Amplitude dieses Signals gewährleistet ist, dass die Vorrichtung bei gleichen Winkelpositionen φ₀ (bzw. φ₃) des Geberrades 1 anspricht.

Bei den bisher betrachteten Ausgestaltungen zwingt die Notwendigkeit, eine Hysterese zu implementieren, dazu, unterschiedliche Referenzpegel für das Umschalten des Ausgangssignals D auf Null bzw. auf Eins zu wählen. Es wäre wünschenswert, diese Referenzpegel möglichst nahe beim Mittelwert O von B zu wählen, denn je näher sie dem Mittelwert O sind, um so kleiner sind Erfassungsfehler, die sich bei wechselnden Drehgeschwindigkeiten des Geberrades 1 aus der Abhängigkeit der Amplitude von A von dieser Drehgeschwindigkeit ergeben können. Je geringer man jedoch die Differenz zwischen den zwei Referenzpegeln macht, um so größer ist die Gefahr, dass ein Rauschanteil im Sensorausgangssignal A zu Erfassungsfehlern führt, bei denen die Vorrichtung zu früh oder zu spät anspricht.

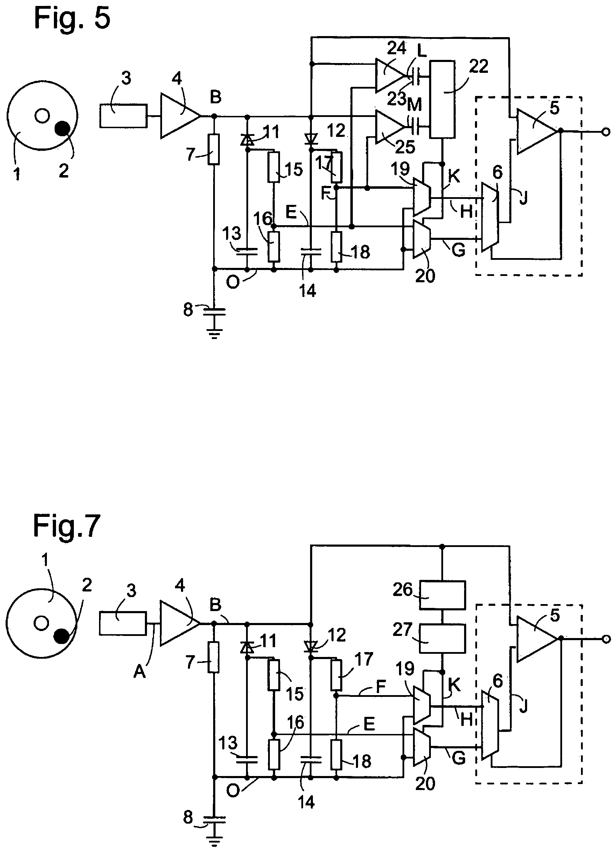

Fig. 5 zeigt eine Weiterentwicklung der erfindungsgemäßen Erfassungsvorrichtung, die es erlaubt, diese sich auf den ersten Blick widersprechenden Anforderungen miteinander zu vereinbaren und exakt diejenige Winkelstellung zu erfassen, bei der das Sensorausgangssignal A seinen Mittelwert kreuzt, und trotzdem eine Hysterese zu realisieren. Bei dieser Ausgestaltung sind die dem Schalter 6 zugeführten Referenzpotentiale, hier mit H, G bezeichnet, nicht konstant bzw. bis auf die bereits erwähnten Driften konstant, sondern sie werden im Laufe jeder Umdrehung des Geberrades 1 zwischen dem durch das RC-Glied 7, 8 erhaltenen mittleren Potential O des verstärkten Sensorausgangssignals B und den von der Amplitudenerfassungsschaltung 11 bis 18 gelieferten, von dem mittleren Potential O jeweils um einen gleichen Betrag nach oben bzw. unten beabstandeten Potential E, F umgeschaltet. Die Umschaltung geschieht mit Hilfe zweier Schalter 19, 20, die ihrerseits wiederum durch das Ausgangssignal K eines RS-Flipflops 22 gesteuert sind. Setz- und Rücksetzeingang des RS-Flipflops 22 sind jeweils über einen Kondensator 23 mit den Ausgängen von Komparatoren 24, 25 verbunden. Die Eingänge des Komparators 24 sind mit dem verstärkten Sensorausgangssignal B bzw. dem Referenzpegel E beschaltet; die des Komparators 25 sind mit dem verstärkten Sensorausgangssignal B bzw. dem Referenzpegel F beschaltet.

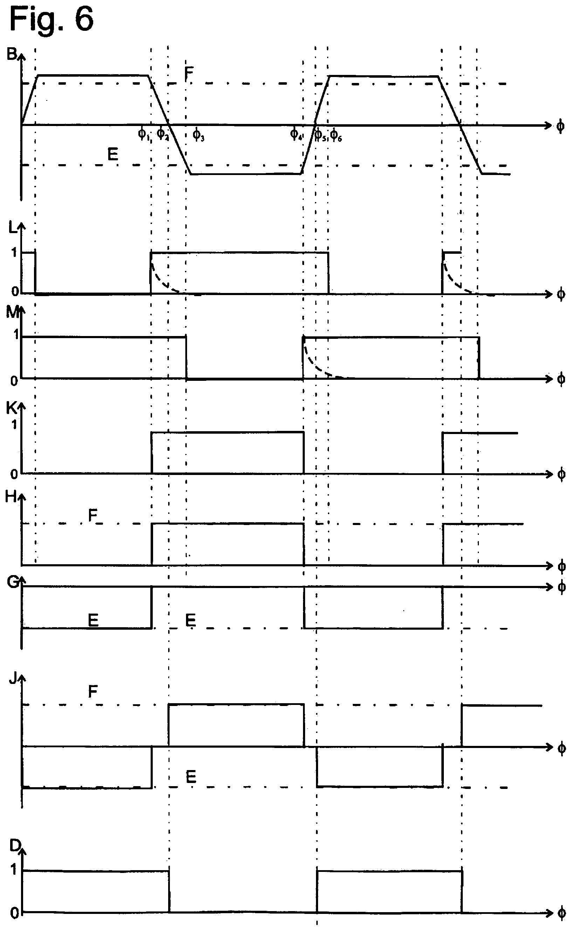

Die Arbeitsweise dieser Ausgestaltung wird anhand der Graphen der Fig. 6 genauer dargestellt. Das Signal B ist als mit dem der Fig. 2 identisch angenommen; das unmittelbare Ausgangssignal A des Magnetfeldsensors 3 ist in Fig. 6 nicht dargestellt. Die zwei Komparatoren 24, 25 leiten von B jeweils ein logisches Signal L bzw. M ab. Das Signal L hat den Wert Eins, wenn B unterhalb des Pegels F liegt, und sonst den Wert Null. Das Signal M hat den Wert Eins, wenn B oberhalb des Pegels E liegt, und sonst den Wert Null. Die Kondensatoren 23 lassen jeweils einen Impuls an einer ansteigenden Flanke der Signale L, M zum RS-Flipflop durch, um dieses zu setzen oder rückzusetzen. Diese Impulse sind als gestrichelte Linien in den Graphen der Signale L, M in Fig. 6 dargestellt. Negative Impulse, die jeweils den abfallenden Flanken der Signale L, M entsprechen, sind ohne Einfluss auf das RS-Flipflop 22 und nicht in der Figur gezeigt; sie können auch durch (nicht dargestellte) Dioden nach Masse abgeleitet werden.

Wie man am Verlauf des Ausgangssignals K des Flipflops 22 erkennt, wird dieses jeweils durch eine ansteigende Flanke des Signals L bei der Winkelposition φ₁ gesetzt und durch eine abfallende Flanke des Signals M bei der Winkelposition φ₄ rückgesetzt. Das Flipflop 22 schaltet somit die Schalter 19, 22 jeweils kurz vor einem Nulldurchgang (φ₂ oder φ₅) des Signals B. Genauer gesagt schaltet das Flipflop 22 kurz vor einem abfallenden Nulldurchgang (bei φ₂) des Signals B das Ausgangssignal G des Schalters 20 vom Pegel E auf Null und das Ausgangssignal H des Schalters 19 vom Pegel Null auf F um.

Am Ursprung der Graphen, bei φ=0, lässt der Schalter 6 das Signal G als Signal J zum Komparator 5 durch. Folglich hat bis zum Winkel φ₁ das Signal J den Pegel E, ist somit niedriger als das Signal B, und das Ausgangssignal D des Komparators 5 ist konstant logisch Eins. Wenn am Winkel φ₁ das Signal G auf Null geht, tut das Signal J das gleiche, die Größenverhältnisse der Eingangssignale des Komparators 5 ändern sich dadurch jedoch nicht, so dass das Ausgangssignal D des Komparators 5 den Pegel 1 behält. Erst beim Nulldurchgang des Signals B, bei φ₂, ändern sich die Größenverhältnisse, und das Ausgangssignal D geht auf Null. Dies führt zur Umschaltung des Schalters 6, der nun das Signal H zum Komparator 5 durchschaltet. Der damit verbundene Pegelanstieg des Signals J auf F verändert das Ausgangssignal D nicht, dieses bleibt Null, aber es wird eine Hysterese dahingehend erreicht, dass eine Störung des Signals B wenigstens die Amplitude F haben muss, um zu einem erneuten Kippen des Ausgangssignals D zu führen.

Wenn am Winkel φ₄ das Signal B wieder über den Pegel E ansteigt, so wird das Flipflop 22 rückgesetzt, und das Signal G geht von Null auf E, und die Signale H, J gehen von F auf Null. Somit liegt die Schaltschwelle des Komparators rechtzeitig vor dem Nulldurchgang des Signals B bei φ₅ wieder auf Null, die Position φ₅ wird korrekt erfasst und zeigt sich als ansteigende Flanke des Ausgangssignals D.

Eine andere Schaltungsvariante, mit der eine einem Nulldurchgang des Signals B entsprechende Winkelposition des Geberrades 1 exakt erfasst werden ist, ist in Fig. 7 gezeigt. Hier sind die Komparatoren 24, 25 und das Flipflop 22 durch ein Differentiationsglied 26, das die zeitliche Ableitung dB/dt des Signals B bildet, und eine Triggerschaltung 27 ersetzt.

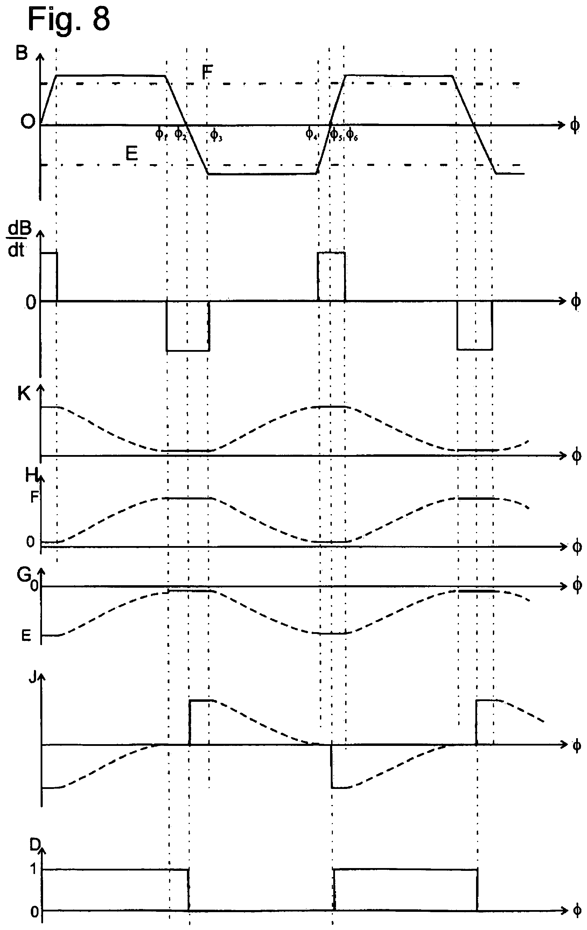

Verläufe von Signalen in der Schaltung der Fig. 7 sind in Fig. 8 dargestellt. Bei dem in der vorliegenden Beschreibung als Beispiel angenommenen zeitweilig gesättigten Verlauf des Signals B ergibt sich für dB/dt der in der Fig. gezeigte Verlauf mit abwechselnden positiven und negativen Intervallen, getrennt durch Intervalle, in denen die Ableitung verschwindet. Die Triggerschaltung 27 formt daraus das die Schalter 19, 20 steuernde Signal K, das jeweils in denjenigen Winkelintervallen, in denen der Verstärker 4 nicht gesättigt ist, je nach Vorzeichen der Ableitung von B den Wert Null oder Eins annimmt und in den dazwischenliegenden Intervallen im Prinzip beliebige Werte annehmen kann, da diese Intervalle für die Funktionsweise der Schaltung ohne Bedeutung sind.

Aus der Form des Schaltsignals K ergibt sich für die Ausgangssignale H, G der Schalter 19, 20 bei Nichtsättigung des Verstärkers 4 die in Fig. 8 als durchgezogene Linien dargestellten Pegel E oder Null bzw. Null oder F. Wie bei der Ausgestaltung der Fig. 5, liegt während einer abfallenden Flanke des Signals B im Winkelintervall [φ₁, φ₃] zunächst das Signal G mit Null-Pegel als Signal J am Eingang des Komparators 5 an; am Nulldurchgang bei φ₂ wird auf das Signal H mit Pegel F umgeschaltet. Im Laufe der negativen Halbwelle des Signals B geht das Signal H und mit ihm das Signal J auf Null, so dass, wenn die ansteigende Flanke des Signals B bei der Winkelposition φ₅ durch Null geht, der Nullpegel wieder als Vergleichspegel am Komparator 5 anliegt.

## Patentansprüche

1. Sensoreinrichtung zur Erfassung einer Winkelposition eines rotierenden Gegenstandes, wobei
die Sensorreinrichtung eine Schaltschwelle und eine Mittelwertbildungsschaltung aufweist zur Mittelwertbildung des Sensorausgangssignals (B) und als Schaltschwelle einen ersten Referenzpegel (E) bzw. einen zweiten Referenzpegel (F) definiert und die beiden Referenzpegel (E, F) unterhalb bzw. oberhalb eines durch die Mittelwertbildungsschaltung gelieferten Mittelwerts liegen, und
die Mittelwertbildungsschaltung das Sensorausgangssignals (B) empfängt und ein Ausgang ein für die Schaltschwelle repräsentatives Signal liefert, und
die Referenzpegel (E, F) innerhalb des Aussteuerbereiches des Sensorausgangssignals (B) liegen, und die Kurve des Sensorausgangssignals (B) schneiden und mit einer Durchgangserfassung eines Sensorausgangssignals (B) durch einen Referenzpegel (E, F), wobei
eine Auswerteschaltung ein Erfassungssignal der Winkelposition nur liefert, wenn der Pegel des Sensorausgangssignals (B) den ersten Referenzpegel (E) oder den zweiten Referenzpegel (F) kreuzt, und
die Auswerteschaltung einen Komparator (5) mit zwei Eingängen umfasst, und der Komparator (5) an einem ersten Eingang und einem zweiten Eingang und einem Ausgang (D) aufweist und an dem ersten Eingang das Sensorausgangssignal (B) und der Ausgang (D) das Erfassungssignal liefert,
**dadurch gekennzeichnet, dass**
eine Auswahlschaltung mit einem Schalter (6) zum wahlweise Zuführen des ersten Referenzpegels (E) oder des zweiten Referenzpegels (F) an den zweiten Eingang des Komparators (5) vorgesehen ist, und
an dem Schalter (6) das Ausgangssignal (D) zum Umschalten des Schalters (6) anliegt.

2. Sensoreinrichtung nach Anspruch 1, **dadurch gekennzeichnet, dass** die Abstände zwischen dem ersten Referenzpegel (E) und dem Mittelwert und zwischen dem zweiten Referenzpegel (F) und dem Mittelwert größer sind als die Rausch- und Störanteile des Sensorsignals in den Flankenbereichen.

3. Sensoreinrichtung nach Anspruch 1 oder 2, **dadurch gekennzeichnet, dass** der Mittelwert aus dem Sensorsignal mittels eines Filters gebildet ist.

4. Sensoreinrichtung nach Anspruch 3, **dadurch gekennzeichnet, dass** die jeweilige Höhe der ersten und zweiten Referenzpegel (E, F) der mittels eines Filters gebildeten Mittelwert nachgeführt sind.

5. Sensoreinrichtung nach Anspruch 1 oder 3, **dadurch gekennzeichnet, dass** der erste und zweite Referenzpegel (E, F) vom negativen bzw. positiven Extremwert des Sensorsignals abhängig sind.

6. Sensoreinrichtung nach einem der vorangegangenen Ansprüche, **dadurch gekennzeichnet, dass** ein induktiver Sensor vorgesehen ist.

7. Sensoreinrichtung nach einem der Ansprüche 1 bis 5, **dadurch gekennzeichnet, dass** ein Hallsensor vorgesehen ist.

## Claims

1. Sensor device for detecting an angular position of a rotating object, wherein
the sensor device has a switching threshold and a mean-value forming circuit for mean value formation of the sensor output signal (B) and a first reference level (E) or a second reference level (F) is defined as switching threshold and the two reference levels (E, F) lie below or above a mean value delivered by the mean-value forming circuit, and
the mean-value forming circuit receives the sensor output signal (B) and an output delivers a signal representative for the switching threshold, and
the reference levels (E, F) lie within the full-output drive range of the sensor output signal (B) and intersect the curve of the sensor output signal (B), and with a pass detection of a sensor output signal (B) through a reference level (E, F), wherein
an evaluating circuit delivers a detection signal of the angular position only when the level of the sensor output signal (B) crosses the first reference level (E) or the second reference level (F), and
the evaluating circuit comprises a comparator (5) with two inputs, and the comparator (5) has a first input and a second input and an output (D) and supplies the sensor output signal (B) at the first input and the detection signal at the output (D),
**characterised in that**
a selection circuit with a switch (6) for selectable feed of the first reference level (E) or the second reference level (F) to the second input of the comparator (5) is provided and the output signal (D) for switching over the switch (6) is applied to the switch (6).

2. Sensor device according to claim 1, **characterised in that** the spacings between the first reference level (E) and the mean value and between the second reference level (F) and the mean value are greater than the noise and disturbance components of the sensor signal in the flank regions.

3. Sensor device according to claim 1 or 2, **characterised in that** the mean value is formed from the sensor signal by way of a filter.

4. Sensor device according to claim 3, **characterised in that** the respective heights of the first and second reference levels (E, F) of the mean value formed by way of a filter are tracked.

5. Sensor device according to claim 1 or 3, **characterised in that** the first and second reference levels (E, F) are dependent on the negative or positive extreme value of the sensor signal.

6. Sensor device according to any one of the preceding claims, **characterised in that** an inductive sensor is provided.

7. Sensor device according to any one of claims 1 to 5, **characterised in that** a Hall sensor is provided.

## Revendications

1. Dispositif de capteur pour déterminer une position angulaire d'un objet en rotation, dans lequel
le dispositif de capteur présente un seuil de commutation et un circuit de calcul de valeur moyenne pour former la valeur moyenne du signal de sortie du capteur (B) et définit comme seuil de commutation un premier niveau de référence (E) ou un second niveau de référence (F) et les deux niveaux de référence (E, F) sont situés au-dessous ou au-dessus d'une valeur moyenne fournie par le circuit de calcul de valeur moyenne, et
le circuit de calcul de valeur moyenne reçoit le signal de sortie du capteur (B) et une sortie fournit un signal représentatif du seuil de commutation et
les niveaux de référence (E, F) sont situés à l'intérieur d'une plage de commande du signal de sortie du capteur (B) et coupent la courbe du signal de sortie du capteur (B) et avec une détection du passage d'un signal de sortie du capteur (B) par un niveau de référence (E, F), dans lequel un circuit d'évaluation ne fournit un signal de détermination de la position angulaire que lorsque le niveau du signal de sortie du capteur (B) croise le premier niveau de référence (E) ou le second niveau de référence (F) et
le circuit d'évaluation comprend un comparateur (5) avec deux entrées et le comparateur (5) présente une première entrée et une seconde entrée et une sortie (D) et fournit à la première entrée le signal de sortie du capteur (B) et à la sortie (D) le signal de détermination,
**caractérisé en ce qu'**il est prévu un circuit de sélection avec un commutateur (6) pour fournir au choix le premier niveau de référence (E) ou le second niveau de référence (F) à la seconde entrée du comparateur (5), et le signal de sortie (D) est appliqué au commutateur (6) pour la commutation du commutateur (6).

2. Dispositif de capteur selon la revendication 1, **caractérisé en ce que** les écarts entre le premier niveau de référence (E) et la valeur moyenne et entre le second niveau de référence (F) et la valeur moyenne sont plus grands que les parties de bruit et de perturbations du signal de capteur dans les zones de flancs.

3. Dispositif de capteur selon la revendication 1 ou 2, **caractérisé en ce que** la valeur moyenne est formée à partir du signal de capteur au moyen d'un filtre.

4. Dispositif de capteur selon la revendication 3, **caractérisé en ce que** la hauteur respective du premier et du second niveaux de référence (E, F) est asservie à la valeur moyenne formée au moyen d'un filtre.

5. Dispositif de capteur selon la revendication 1 ou 3, **caractérisé en ce que** le premier et le second niveaux de référence (E, F) dépendent de la valeur extrême négative ou positive du signal de capteur.

6. Dispositif de capteur selon l'une quelconque des revendications précédentes, **caractérisé en ce qu'**il est prévu un capteur inductif.

7. Dispositif de capteur selon l'une quelconque des revendications 1 à 5, **caractérisé en ce qu'**il est prévu un capteur de Hall.
